(19) Europäisches Patentamt
European Patent Office
Office européen des brevets

(11) EP 1 749 856 A1

(12) **EUROPEAN PATENT APPLICATION**
published in accordance with Art. 158(3) EPC

(43) Date of publication:
**07.02.2007 Bulletin 2007/06**

(21) Application number: **05743504.2**

(22) Date of filing: **24.05.2005**

(51) Int Cl.:
***C08L 69/00*** *(2006.01)* ***C08K 5/103*** *(2006.01)*
***C08K 5/3467*** *(2006.01)* ***G02C 7/02*** *(2006.01)*

(86) International application number:
**PCT/JP2005/009832**

(87) International publication number:
**WO 2005/116138 (08.12.2005 Gazette 2005/49)**

(84) Designated Contracting States:
**AT BE BG CH CY CZ DE DK EE ES FI FR GB GR HU IE IS IT LI LT LU MC NL PL PT RO SE SI SK TR**

(30) Priority: **27.05.2004 JP 2004157264**

(71) Applicant: **Teijin Chemicals, Ltd.**
**Tokyo 100-0011 (JP)**

(72) Inventor: **IKARI, Keizo,**
**Teijin Chemicals Ltd.**
**Tokyo 100-0011 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **SPECTACLE LENS**

(57) There is provided a spectacle lens formed from a polycarbonate resin composition comprising, based on (1) 100 parts by weight of polycarbonate resin (component a), (2) 0.1 to 0.5 parts by weight of at least one ultraviolet absorber (component b) selected from the group consisting of 2,2'-methylenebis[4-(1,1,3,3-tetramethylbutyl)-6-(2 H- benzotriazole-2-yl)phenol] and 2-[2-hydroxy-3,5-bis($\alpha$,$\alpha$-dimethylbenzyl)phenyl]-2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and which has an acid value of 4 to 20, and (4) 0.001 to 0.2 parts by weight of phosphorus-based stabilizer (component d).

According to the present invention, there is provided a spectacle lens formed from a polycarbonate resin composition which has molding heat resistance in molding of the spectacle lens by injection molding or extrusion compression molding, especially, molding heat resistance which allows the composition to endure long-term high-temperature retention, shows a little change in hue even if a heat history is added and has good mold releasability. Further, according to the present invention, there is provided a spectacle lens which substantially does not allow ultraviolet radiation of 385 nm to penetrate therethrough and has high total light transmittance and excellent transparency.

EP 1 749 856 A1

## Description

### Technical Field

This invention relates to a spectacle lens formed from a polycarbonate resin composition which is excellent in transparency and ultraviolet absorbability. More specifically, it relates to a spectacle lens formed from a polycarbonate resin composition which shows good mold releasability and good molding heat resistance, particularly, good high-temperature residence heat resistance, and hardly undergoes yellowing even if having a heat history, i.e. has excellent hue.

### Background Art

A polycarbonate resin has a high refractive index and excellent transparency and impact resistance and has recently been widely used as a raw material for various lenses, particularly, for spectacle lenses. A spectacle lens made of the polycarbonate resin is thinner and lighter and has significantly higher impact resistance and is therefore safer and highly functional than a conventional glass lens and a plastic lens formed by cast polymerization (hereinafter referred to as "cast lens"). Therefore, the polycarbonate resin lens has been becoming increasingly used as a vision corrective lens or for sunglasses and protective glasses.

Recently, it is strongly demanded that ultraviolet absorbability be imparted to spectacle lenses to protect the eyes from harmful ultraviolet radiation. For example, cast lenses and glass lenses meet the demand by having a coating layer having ultraviolet absorbability on the surface of the lens. However, the method of imparting the coating layer has problems that it is costly and that the lens becomes slightly yellowed. Further, in the case of the cast lenses, it is also practiced to add an ultraviolet absorber at the time of polymerization. However, the method has problems that polymerizability is inhibited and that the lens becomes significantly yellowed.

Meanwhile, in the case of the polycarbonate resin spectacle lens, the polycarbonate resin itself has a certain degree of ultraviolet absorbability and is a thermoplastic resin. Accordingly, a given ultraviolet absorber can be incorporated into the polycarbonate resin lens easily if the ultraviolet absorber is added at the time of melt-molding of the resin. However, the conventional polycarbonate resin can absorb ultraviolet radiation of up to 375 nm, and to absorb ultraviolet radiation having a long wavelength of higher than 375 nm, an ultraviolet absorber must be added in an amount two to ten times a generally added amount. In general, ultraviolet absorbers are sublime. Therefore, when an ultraviolet absorber is added in a large amount, the ultraviolet absorber sublimes and contaminates a mirror mold at the time of injection molding of the polycarbonate resin, whereby a lens having a significantly degraded appearance is obtained.

Japanese Patent Publications Nos. 6-035141 and 6-041162 exemplify a method comprising adding 0.1 to 20 parts by weight of oligomer-type ultraviolet absorber which does not sublime easily into a polycarbonate resin and forming a surface layer at the time of extrusion of a multilayer laminated sheet or film. However, their purposes are not optical but to impart weather resistance to the sheet. Further, some ultraviolet absorbers have a capability of absorbing ultraviolet radiation of longer wavelength. When the ultraviolet absorber for absorbing ultraviolet radiation of longer wavelength is added, a polycarbonate resin is significantly yellowed. Accordingly, a large amount of a bluing agent must be added to eliminate yellowness. However, when this method is applied to production of a lens, it can provide only a lens which is significantly opaque because a large amount of the bluing agent inhibits transparency for lens and lowers luminous transmittance.

Further, Japanese Patent Laid-Open Publication No. 7-092301 proposes a plastic lens which prevents ultraviolet radiation and near-infrared radiation from penetrating therethrough by containing an ultraviolet absorber and an infrared absorber. However, the lens obtained by this method has unsatisfactory transparency.

Meanwhile, Japanese Patent Laid-Open Publication No. 62-146951 describes a polycarbonate resin composition having its light resistance improved by containing 0.001 to 5 parts by weight of alkylidene bis(benzotriazolylphenol) compound represented by a specific structural formula based on 100 parts by weight of polycarbonate resin. This publication presents the result of preparing test pieces by adding 0.30 wt% of each of five specific compounds to a polycarbonate resin, irradiating the test pieces with ultraviolet radiation by use of a high-pressure mercury lamp, measuring the degrees of yellowness of the test pieces and measuring changes ($\Delta$YI) thereof. The result merely indicates that the change in the degree of yellowness was decreased by addition of the above specific compounds.

Japanese Patent Laid-Open Publication No. 4-292661 describes a resin composition comprising 0.01 to 0.15 parts by weight of ultraviolet absorber having an absorption maximum at wavelengths of 280 to 360 nm and having no absorption at a wavelength of 400 nm based on 100 parts by weight of transparent thermoplastic resin including a polycarbonate resin. This resin composition has been developed as a camera lens having a light transmittance at a wavelength of 400 nm of not lower than 80% since a silver salt film has a sensitivity peak at a wavelength of 400 nm.

Further, Japanese Patent Laid-Open Publications Nos. 9-263694 and 9-291205 describe a resin composition comprising two ultraviolet absorbers having an absorption maximum at a wavelength of 300 to 345 nm and a wavelength

of 346 to 400 nm based on 100 parts by weight of transparent thermoplastic resin including a polycarbonate resin. This composition has been developed as a spectacle lens having excellent transparency and high ultraviolet absorbability. This composition undergoes a large change in hue when a heat history is added, e.g. when it is caused to stay at a molding temperature and is therefore unsatisfactory with respect to molding heat resistance.

In addition, International Publication No. WO 03/095557 (pamphlet) discloses a composition comprising (a) a polycarbonate resin, (b) a full ester of a specific aliphatic polyhydric alcohol and a specific aliphatic carboxylic acid and (c) an ultraviolet absorber. The polycarbonate resin composition which is specifically described in this publication has a problem of having insufficient ultraviolet absorbability required for spectacle lenses.

Disclosure of the Invention

A first object of the present invention is to provide a spectacle lens formed from a polycarbonate resin composition which has molding heat resistance in molding of the spectacle lens by injection molding or extrusion compression molding, especially, molding heat resistance which allows the composition to endure long-term high-temperature retention, shows a little change in hue even if a heat history is added and has good mold releasability.

A second object of the present invention is to provide a spectacle lens made of a polycarbonate resin which has excellent impact resistance and transparency and can cut ultraviolet radiation of a specific wavelength nearly completely.

A third object of the present invention is to provide a spectacle lens made of a composition which is hardly yellowed by ultraviolet radiation and is free from contamination of a mirror mold by sublimation of ultraviolet absorber during molding.

A fourth object of the present invention is to provide a spectacle lens which substantially does not allow a wavelength of 385 nm to penetrate therethrough and has a high total light transmittance of not lower than 85%.

To achieve the above objects, the present inventors have made intensive studies on mold releasing agents and ultraviolet absorbers used for polycarbonate resins. As a result, they have found that when a specific mold releasing agent, a specific ultraviolet absorber and a specific phosphorus-based stabilizer are used in combination, a change in hue by heat at the time of molding is improved without inhibiting moldability and without impairing the transparency of a lens and ultraviolet radiation of 385 nm can be absorbed nearly completely and this invention is achieved by the finding.

That is, according to the present invention, the following spectacle lens is provided.

1. A spectacle lens formed from a polycarbonate resin composition comprising, based on (1) 100 parts by weight of polycarbonate resin (component a), (2) 0.1 to 0.5 parts by weight of at least one ultraviolet absorber (component b) selected from the group consisting of 2,2'-methylenebis[4-(1,1,3,3-tetramethylbutyl)-6-(2 H-benzotriazole-2-yl) phenol] and 2-[2-hydroxy-3,5-bis($\alpha$,$\alpha$-dimethylbenzyl)phenyl]-2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and which has an acid value of 4 to 20, and (4) 0.001 to 0.2 parts by weight of phosphorus-based stabilizer (component d).
2. The spectacle lens of the above 1, wherein the aliphatic carboxylic acid of the component c comprises a palmitic acid component and a stearic acid component, and in a peak area in a gas chromatograph-mass spectrometry (GC/MS) , the total of the area (Sp) of the palmitic acid component and the area (Ss) of the stearic acid component constitutes at least 80% of all aliphatic carboxylic acid component, and the ratio (Ss/Sp) of the two areas is 1.3 to 30.
3. The spectacle lens of the above 1, wherein the component c has a 5% weight reduction temperature in TGA (thermogravimetrical analysis) of 250 to 360°C.
4. The spectacle lens of the above 1, wherein the component c has an acid value of 4 to 18.
5. The spectacle lens of the above 1, wherein the component b is 2,2'-methylenebis[4-(1,1,3,3-tetramethylbutyl)-6-(2H-benzotriazole-2-yl)phenol].
6. The spectacle lens of the above 1, wherein the component d is a phosphorus-based stabilizer composed essentially of tetrakis(2,4-di-t-butylphenyl)-4,4'-biphenylene diphosphonite.
7. The spectacle lens of the above 1, wherein the component b is contained in an amount of 0.15 to 0.4 parts by weight based on 100 parts by weight of the component a.
8. The spectacle lens of the above 1, wherein the component c is contained in an amount of 0.05 to 0.5 parts by weight based on 100 parts by weight of the component a.
9. The spectacle lens of the above 1, wherein the polycarbonate resin is a polycarbonate resin comprising 2,2-bis (4-hydroxyphenyl)propane as a main dihydric phenol component.
10. The spectacle lens of the above 1, which substantially does not allow a wavelength of 385 nm to penetrate therethrough and having a total light transmittance of not lower than 85%.
11. A spectacle lens formed from a polycarbonate resin composition comprising, based on (1) 100 parts by weight of polycarbonate resin (component a), (2) 0.1 to 0.5 parts by weight of at least one ultraviolet absorber (component

b) selected from the group consisting of 2,2'-methylenebis[4-(1,1,3,3-tetramethylbutyl)-6-(2H-benzotriazole-2-yl) phenol] and 2-[2-hydroxy-3,5-bis($\alpha$,$\alpha$-dimethylbenzyl)phenyl]-2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and (4) 0.001 to 0.2 parts by weight of phosphorus-based stabilizer (component d), the molar ratio (Ff:Fe) of the number (Ff) of moles of carboxyl groups of free aliphatic carboxylic acid in the polycarbonate resin composition to the number (Fe) of moles of ester bonds in the component c being 8:92 to 30:70.

Hereinafter, the spectacle lens of the present invention will be further described.

(1) About Component a

The polycarbonate resin as the component a in the present invention is an aromatic polycarbonate resin obtained by reacting a dihydric phenol with a carbonate precursor. Specific examples of the dihydric phenol used herein include bis(hydroxyaryl)alkane such as 2,2-bis(4-hydroxyphenyl)propane (commonly known as bisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxyphenyl)phenylmethane, 2,2-bis(4-hydroxy-3-methylphenyl)propane, 1,1-bis(4-hydroxy-3-t-butylphenyl) propane, 2,2-bis(4-hydroxy-3-bromophenyl)propane, 2,2-bis(4-hydroxy-3,5-dibromophenyl)propane and 2,2-bis(4-hydroxy-3,5-dichlorophenyl)propane; bis(hydroxyphenyl)cycloalkane such as 1,1-bis(hydroxyphenyl)cyclopentane and 1,1-bis(hydroxyphenyl)cyclohexane; dihydroxyaryl ether such as 4,4'-dihydroxydiphenyl ether and 4,4'-dihydroxy-3,3'-dimethyldiphenyl ether; dihydroxydiaryl sulfide such as 4,4'-dihydroxydiphenyl sulfide and 4,4'-dihydroxy-3,3'-dimethyldiphenyl sulfide; dihydroxydiaryl sulfoxide such as 4,4'-dihydroxydiphenyl sulfoxide and 4,4'-dihydroxy-3,3'-dimethyldiphenyl sulfoxide; and dihydroxydiaryl sulfone such as 4,4'-dihydroxydiphenyl sulfone and 4,4'-dihydroxy-3,3'-dimethyldiphenyl sulfone. These dihydric phenols may be used alone or in combination of two or more.

Of the above dihydric phenols, 2,2-bis(4-hydroxyphenyl)propane (bisphenol A) is preferably contained as a main dihydric phenol component. Particularly, an aromatic polycarbonate resin in which bisphenol A constitutes at least 70 mol%, particularly at least 80 mol% of all dihydric phenol components is preferred. The most preferable is an aromatic polycarbonate resin whose dihydric phenol component is substantially bisphenol A.

Basic means for producing the polycarbonate resin will be described briefly. In a solution method using phosgene as a carbonate precursor, a dihydric phenol component and phosgene are generally reacted with each other in the presence of an acid binder and an organic solvent. As the acid binder, an alkali metal hydroxide such as sodium hydroxide or potassium hydroxide or an amine compound such as pyridine is used, for example. As the organic solvent, a halogenated hydrocarbon such as methylene chloride or chlorobenzene is used, for example. Further, to accelerate the reaction, a catalyst such as tertiary amine or a quaternary ammonium salt can be used. A terminal blocking agent, e.g. phenol or an alkyl substituted phenol such as p-t-butylphenol, is desirably used as a molecular weight modifier. The reaction temperature is generally 0 to 40°C, the reaction time is several minutes to 5 hours, and the pH during the reaction is preferably kept at 10 or higher.

A transesterification method (melting method) using a carbonic diester as a carbonate precursor is a method which comprises distilling out an alcohol or phenol produced while agitating predetermined amounts of a dihydric phenol component and the carbonic diester under heating in the presence of inert gas. Although varying depending on the boiling point of the alcohol or phenol produced or the like, the reaction temperature is generally 120 to 350°C. The reaction is carried out under reduced pressure from the start while the alcohol or phenol produced is being distilled out. Further, to accelerate the reaction, a commonly used transesterification reaction catalyst may be used. Illustrative examples of the carbonic diester used in this transesterification reaction include diphenyl carbonate, dinaphthyl carbonate, dimethyl carbonate, diethyl carbonate and dibutyl carbonate. Diphenyl carbonate is particularly preferred.

The molecular weight of the polycarbonate resin used in the present invention is preferably 17,000 to 30,000, particularly preferably 20,000 to 26,000, in terms of viscosity average molecular weight. A spectacle lens is a precision molded article, and it is important to transfer the mirror surface of a mold accurately so as to impart a predetermined curvature and frequency. Although a low-viscosity resin having good melt flowability is desired, impact strength which is a characteristic of the polycarbonate resin cannot be retained if the viscosity is too low. The viscosity average molecular weight (M) of the polycarbonate resin is a value obtained by measuring the specific viscosity ($\eta_{sp}$) of solution prepared by dissolving 0.7 g of the polycarbonate resin in 100 ml of methylene chloride at 20°C by use of Ostwald viscometer and substituting the specific viscosity into the following formula:

$$\eta_{sp}/c = [\eta] + 0.45 \times [\eta]^2 c \quad ([\eta] \text{ is intrinsic viscosity})$$

$$[\eta] = 1.23 \times 10^{-4} M^{0.83}$$

$$c = 0.7$$

(2) About Component b

The polycarbonate resin composition used in the present invention contains a specific ultraviolet absorber (component b) in the above polycarbonate resin. The ultraviolet absorber (component b) is at least one ultraviolet absorber selected from the group consisting of 2,2'-methylenebis [4- (1,1,3,3-tetramethylbutyl)-6-(2H-benzotriazole-2-yl)phenol] and 2-[2-hydroxy-3,5-bis(α,α-dimethylbenzyl)phenyl]-2H-benzotriazole. As the above ultraviolet absorber, 2,2'-methylenebis[4-(1,1,3,3-tetramethylbutyl)-6-(2H-benzotriazole-2-yl)phenol] is more suitable.

The above ultraviolet absorber (component b) is contained in an amount of 0.1 to 0.5 parts by weight, preferably 0.12 to 0.45 parts by weight, particularly preferably 0.15 to 0.4 parts by weight, based on 100 parts by weight of the polycarbonate resin. When the amount is smaller than 0.1 parts by weight, ultraviolet absorbability is unsatisfactory, while when it is larger than 0.5 parts by weight, hue is significantly degraded, resulting in an opaque lens.

When the polycarbonate resin composition containing a specific amount of the above ultraviolet absorber (component b) is molded into a plate having a thickness of 5 mm, the molded plate shows a spectral transmittance at 385 nm of not higher than 1%, preferably not higher than 0.1%, and can absorb ultraviolet radiation of this wavelength nearly completely, shows a spectral transmittance at 400 nm of not higher than 30%, preferably not higher than 10%, and retains a total light transmittance of not lower than 87%, preferably not lower than 88%, and the hue of the lens is also good. The lens also has an advantage that it is hardly yellowed by ultraviolet radiation.

(3) About Component c

The mold releasing agent (component c) used in the present invention substantially comprises a full ester of an aliphatic polyhydric alcohol and an aliphatic carboxylic acid.

The component c comprises a full ester of an aliphatic tetrahydric to octahydric alcohol having 5 to 30 carbon atoms and an aliphatic carboxylic acid having 10 to 22 carbon atoms and has an acid value of 4 to 20. The full ester in the component c does not necessarily have to be one with an esterification rate of 100%. It is sufficiently one with an esterification rate of 80% or higher, preferably one with an esterification rate of 85% or higher.

In the present invention, due to the component c having an acid value of 4 to 20, the full ester can reduce mold releasing force (or improve mold releasability) more than conventional full esters, and a polycarbonate resin composition having excellent molding heat resistance can be obtained. When the acid value is smaller than 4, it is difficult to reduce the mold releasing force, while when it is larger than 20, molding heat resistance is unsatisfactory. The acid value is preferably 4 to 18, more preferably 5 to 15. A main component which causes the acid value is a free aliphatic carboxylic acid (hereinafter may be simply referred to as "free fatty acid") contained in the fatty acid ester. Therefore, the fatty acid ester which is the component c used in the present invention contains acid components including the free fatty acid in an amount that corresponds to the acid value. The acid value is the number of milligrams of potassium hydroxide required to neutralize a free fatty acid and the like contained in 1 g of sample and can be determined by a method provided in JIS K 0070.

Further, the component c preferably has a 5% weight reduction temperature (hereinafter may be simply referred to as "weight reduction temperature") measured by TGA (thermogravimetrical analysis) of 250 to 360°C.

When the weight reduction temperature of the component c exceeds 360°C, it is difficult to reduce the mold releasing force. Further, when the weight reduction temperature is too low, molding heat resistance is unsatisfactory, possibly resulting in discoloration and deterioration in cracking resistance. Thus, the weight reduction temperature is preferably 250°C or higher, more preferably 280 to 360°C, much more preferably 300 to 350°C, particularly preferably 310 to 340°C.

The weight reduction temperature is determined as temperature at which a weight reduction of 5% is observed in a measurement condition in which temperature in a nitrogen gas atmosphere increases from 23°C to 600°C at a temperature increasing rate of 20°C/min by a TGA measuring apparatus.

The acid value and weight reduction temperature in the component c of the present invention have a certain degree of correlation. For example, when fatty acid full esters of the same type are compared, the weight reduction temperature becomes lower as the acid value becomes larger. Since the component c in the present invention substantially comprises the full ester, slipperiness between polycarbonate molecules is improved. It is assumed that this causes

the resin to flow smoothly even when the flow of the resin in a mold is complex and the effect is so predominant that distortion in a molded article is reduced. That is, it is assumed that when frictional force between molecules is high, nonuniform frictional force which has occurred locally disturbs the flow of the resin, while when frictional force as a whole is low, its influence is hardly noticeable. Further, it is also assumed to be a reason why distortion caused by disturbance in the flow of the resin does not increase that the proportion of volatile component in the component c is adequate and it is not a component which increases like a chain reaction such as cracked gas.

Further, the component c itself has good chemical resistance and shows low aggression against a polycarbonate resin. It is assumed that the cracking resistance of molded article is improved thereby. Further, it is assumed that an effect of lowering aggression against the polycarbonate resin so as to inhibit deterioration of the polycarbonate resin becomes more effective by use of the phosphorus-based stabilizer as the component d and a hindered phenol based antioxidant which will be described later in combination with the component c.

The component c in the present invention not only refers to an ester compound itself but also generically refers to a mixture of the compound with a free aliphatic carboxylic acid compound. Further, it is also possible to prepare a fatty acid ester having a desired acid value and weight reduction temperature by adding an aliphatic carboxylic acid to a fatty acid full ester having a small acid value or high weight reduction temperature, by taking advantage of the foregoing fact that the values of an acid value and weight reduction temperature change according to the proportion of free aliphatic carboxylic acid. It is also possible to prepare a fatty acid full ester which satisfies the requirements of the present invention by mixing two or more fatty acid esters having different acid values and weight reduction temperatures together.

A method for producing the component c of the present invention is not particularly limited, and an aliphatic polyhydric alcohol and an aliphatic carboxylic acid can be used by a variety of conventionally known methods. Further, to satisfy the specific requirements of the present invention, terminating a reaction between a theoretical equivalent of an aliphatic polyhydric alcohol and a slightly excessive amount of an aliphatic carboxylic acid at a relatively early stage is preferred to fully completing a reaction between a theoretical equivalent of an aliphatic polyhydric alcohol and a theoretical equivalent of an aliphatic carboxylic acid over a sufficient time.

Illustrative examples of a reaction catalyst include sodium hydroxide, potassium hydroxide, barium hydroxide, calcium hydroxide, calcium oxide, barium oxide, magnesium oxide, zinc oxide, sodium carbonate, potassium carbonate, and organotin compounds such as 2-ethylhexyl tin.

The polyhydric alcohol used to produce the component c is an aliphatic polyhydric alcohol having a valence of 4 to 8 (i.e. 4 to 8 hydroxyl groups) and 5 to 30 carbon atoms. The valence of the aliphatic polyhydric alcohol is preferably 4 to 6, and the number of carbon atoms is preferably 5 to 12, more preferably 5 to 10. The aliphatic polyhydric alcohol may contain an ether bond in the carbon chain. Specific examples of the aliphatic polyhydric alcohol include pentaerythritol, dipentaerythritol, tripentaerythritol, polyglycerol (triglycerol to hexaglycerol), ditrimethylolpropane, xylitol, sorbitol, and mannitol. Of these, pentaerythritol and dipentaerythritol are preferred, and pentaerythritol is particularly preferred.

Illustrative examples of the aliphatic carboxylic acid having 10 to 22 carbon atoms which is used to produce the component c include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, icosanoic acid and docosanoic acid; and unsaturated aliphatic carboxylic acids such as palmitoleic acid, oleic acid, linoleic acid, linolenic acid, eicosenoic acid, eicosapentaenoic acid and cetoleic acid. Of these, an aliphatic carboxylic acid having 14 to 20 carbon atoms is preferred. Inter alia, a saturated aliphatic monocarboxylic acid is preferred. Stearic acid and palmitic acid are particularly preferred.

Aliphatic carboxylic acids such as stearic acid and palmitic acid are generally produced from natural fat and oil such as animal fat (e.g. beef fats or lard) and vegetable oil (e.g. palm oil). Accordingly, the aliphatic carboxylic acid such as stearic acid is generally a mixture comprising other carboxylic acid components differing in the number of carbon atoms. For production of the component c in the present invention, stearic acid and palmitic acid produced from the natural fat and oil and taking a form of a mixture comprising other carboxylic acid components are also preferably used. A preferred composition ratio of components in the mixture is as follows.

That is, the aliphatic carboxylic acid component which constitutes the full ester of the component c preferably comprises a palmitic acid component and a stearic acid component and has a proportion of the total of the area (Sp) of the palmitic acid component and the area (Ss) of the stearic acid component in all aliphatic carboxylic acids of 80% or higher and a ratio (Ss/Sp) of the two areas of 1.3 to 30, in a peak area in a pyrolysis methylation GC/MS (gas chromatograph-mass spectrometry) method.

The pyrolysis methylation GC/MS method is a method comprising reacting a fatty acid full ester that is a sample with methylammonium hydroxide that is a reagent on PYROFIL to decompose the fatty acid full ester and produce a methyl ester derivative of fatty acid and subjecting the derivative to GC/MS measurement.

The total of the Sp and Ss is preferably 85% or higher, more preferably 90% or higher, much more preferably 91% or higher, in all aliphatic carboxylic acid components. Meanwhile, although the total of the Sp and Ss may be 100%, it is preferably 98% or lower, more preferably 96% or lower, in view of product costs. Further, the above area ratio (Ss/Sp) is preferably 1.3 to 30, more preferably 1.3 to 10, much more preferably 1.3 to 4, particularly preferably 1.3 to 3. These

mixing ratios are not necessarily satisfied by a single aliphatic carboxylic acid and may be satisfied by mixing two or more aliphatic carboxylic acids.

Further, illustrative examples of fats and oils used as raw materials of aliphatic carboxylic acids which satisfy the above mixing ratios include animal fats such as beef fats and lard, and vegetable oils such as linseed oil, safflower oil, sunflower oil, soybean oil, corn oil, peanut oil, cottonseed oil, sesame oil and olive oil. Of these, animal fats are preferred because they contain a larger quantity of stearic acid, and beef fats are more preferred. Of the beef fats, oleostearin containing large quantities of saturated components such as stearic acid and palmitic acid is preferred.

The hydroxyl value of the component c is preferably low in view of molding heat resistance and reduction in mold releasing force. However, when the hydroxyl value is too low, manufacturing time increases, resulting in an unfavorable increase in costs. The hydroxyl value of the component c is suitably 0.1 to 30, preferably 1 to 30, more preferably 2 to 20. The hydroxyl value is the number of milligrams of potassium hydroxide required to neutralize acetic acid bonded to hydroxyl groups when 1 g of sample is acetylated and can be determined in accordance with a method provided in JIS K 0070.

The iodine value of the component c is preferably low in view of molding heat resistance. The iodine value of the component c is preferably 10 or lower, more preferably 1 or lower. The iodine value is the amount of halogen bonded, in terms of the number of grams of iodine, when 100 g of sample is reacted with halogen and can be determined in accordance with a method provided in JIS K 0070.

The amount of the component c is 0.005 to 2 parts by weight, preferably 0.01 to 1 part by weight, more preferably 0.05 to 0.5 parts by weight, based on 100 parts by weight of the polycarbonate resin (component a). When the amount of the component c is smaller than the above range, an improvement in mold releasability is not sufficient, and cracking resistance is also deteriorated. Meanwhile, when the amount of the component c is larger than the above range, the transparency of a molded article is impaired, and cracking resistance may also be deteriorated by deterioration in molding heat resistance.

(4) About Component d

The polycarbonate resin composition of the present invention contains a phosphorus-based heat stabilizer (component d) in an amount of 0.001 to 0.2 parts by weight, preferably 0.005 to 0.15 parts by weight, based on 100 parts by weight of the polycarbonate resin. Illustrative examples of the phosphorus-based heat stabilizer include phosphorous acid, phosphoric acid, phosphonous acid, phosphonic acid, and their esters. Specific examples thereof include triphenyl phosphite, tris(nonylphenyl)phosphite, tris(2,4-di-t-butylphenyl)phosphite, tris(2,6-di-t-butylphenyl)phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-t-butyl-4-methylphenyl)pentaerythritol diphosphite, 2,2-methylenebis(4,6-di-t-butylphenyl)octyl phosphite, bis(nonylphenyl)pentaerythritol diphosphite, bis(2,4-di-t-butylphenyl)pentaerythritol diphosphite, distearyl pentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-t-butylphenyl)-4,4'-biphenylene diphosphonite, tetrakis(2,4-di-t-butylphenyl)-4,3'-biphenylene diphosphonite, tetrakis(2,4-di-t-butylphenyl)-3,3'-biphenylene diphosphonite, bis(2,4-di-t-butylphenyl)-4-phenyl-phenyl phosphonite, and bis(2,4-di-t-butylphenyl)-3-phenyl-phenyl phosphonite.

Of these, tris(2,4-di-t-butylphenyl)phosphite, tris(2,6-di-t-butylphenyl)phosphite, tetrakis(2,4-di-t-butylphenyl)-4,4'-biphenylene diphosphonite, tetrakis(2,4-di-t-butylphenyl)-4,3'-biphenylene diphosphonite, tetrakis(2,4-di-t-butylphenyl)-3,3'-biphenylene diphosphonite, bis(2,4-di-t-butylphenyl)-4-phenyl-phenyl phosphonite and bis(2,4-di-t-butylphenyl)-3-phenyl-phenyl phosphonite are used. A phosphorus-based heat stabilizer comprising tetrakis(2,4-di-t-butylphenyl)-4,4'-biphenylene diphosphonite as a main component is particularly preferably used. The term "main component" as used herein indicates that the component comprises at least 30 wt%, preferably at least 40 wt% of the component d.

(5) About Other Additives

For the polycarbonate resin composition of the present invention, a generally known hindered phenol antioxidant (component e) can be used to prevent oxidation. Illustrative examples of the hindered phenol antioxidant include pentaerythritol tetrakis(3-mercaptopropionate), pentaerythritol tetrakis(3-laurylthiopropionate), glycerol-3-stearylthiopropionate, triethylene glycol-bis[3-(3-t-butyl-5-methyl-4-hydroxyphenyl) propionate], 1,6-hexanediol-bis[3-(3,5-di-t-butyl-4-hydroxyphenyl)propionate], pentaerythritol-tetrakis[3-(3,5-di-t-butyl-4-hydroxyphenyl)propionate], octadecyl-3-(3,5-di-t-butyl-4-hydroxyphenyl) propionate, 1,3,5-trimethyl-2,4,6-tris(3,5-di-t-butyl-4-hydroxy benzyl) benzene, N,N-hexamethylenebis(3,5-di-t-butyl-4-hydroxyhydrocinnamide), 3,5-di-t-butyl-4-hydroxybenzylphosphonate-diethyl ester, tris(3,5-di-t-butyl-4-hydroxybenzyl)isocyanurate and 3,9-bis{1,1-dimethyl-2-[β-(3-t-butyl-4-hydroxy-5-methylphenyl)propionyloxy]ethyl}-2,4,8,10-tetraoxaspiro (5,5)undecane. Octadecyl-3-(3,5-di-t-butyl-4-hydroxyphenyl)propionate is particularly preferably used. These antioxidants (component e) are preferably used in an amount of 0.001 to 0.1 parts by weight based on 100 parts by weight of the polycarbonate resin.

The polycarbonate resin composition of the present invention may contain a bluing agent (component f) to remove a yellow tinge in a lens which is caused by the polycarbonate resin (component a) or the ultraviolet absorber (component b) when the composition is molded into the spectacle lens. As the bluing agent, any bluing agent which is used in polycarbonate resins can be used without any particular problems. In general, anthraquinone dye is easy to obtain and preferred.

Specific examples of the bluing agent include Solvent Violet 13 (CA. No (color index No) 60725; trade name "Macrolex Violet B" of Bayer AG, "Diaresin Blue G" of Mitsubishi Chemical Corporation, "Sumiplast Violet B" of Sumitomo Chemical Co., Ltd.], Solvent Violet 31 (CA. No 68210; trade name "Diaresin Violet D" of Mitsubishi Chemical Corporation), Solvent Violet 33 [CA. No 60725; trade name "Diaresin Blue J" of Mitsubishi Chemical Corporation], Solvent Blue 94 (CA. No 61500; trade name "Diaresin Blue N" of Mitsubishi Chemical Corporation), Solvent Violet 36 (CA. No 68210; trade name "Macrolex Violet 3R" of Bayer AG), Solvent Blue 97 (trade name "Macrolex Blue RR" of Bayer AG), and Solvent Blue 45 (CA. No 61110; trade name "Tetrasol Blue RLS" of Sandoz Ltd.). These bluing agents (component f) are generally contained in a concentration of 0.1 to 6 ppm in the polycarbonate resin. When a considerably large amount of the bluing agent is contained, absorption by the bluing agent is so strong that luminous transmittance lowers, resulting in an opaque lens. In particular, in the case of a vision corrective lens, the lens has a thick portion and a thin portion and has a great variation in thickness. Accordingly, when absorption by the bluing agent is strong, a difference in hue ascribable to a difference in thickness between the central portion and peripheral portion of the lens occurs, resulting in significantly poor appearance of the lens.

(6) Another Embodiment of Resin Composition

According to the present invention, a spectacle lens formed from a polycarbonate resin composition of the following embodiment is provided. That is, another embodiment of the present invention is a spectacle lens formed from a polycarbonate resin composition comprising, based on (1) 100 parts by weight of polycarbonate resin (component a), (2) 0.1 to 0.5 parts by weight of at least one ultraviolet absorber (component b) selected from the group consisting of 2,2'-methylenebis[4-(1,1,3,3-tetramethylbutyl)-6-(2H-benzotriazole)-2-ylphenol] and 2-[2-hydroxy-3,5-bis($\alpha$,$\alpha$-dimethylbenzyl)phenyl]-2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and (4) 0.001 to 0.2 parts by weight of phosphorus-based stabilizer (component d), the molar ratio (Ff:Fe) of the number (Ff) of moles of carboxyl groups of free aliphatic carboxylic acid in the polycarbonate resin composition to the number (Fe) of moles of ester bonds in the component c being 8:92 to 30:70.

The ratio of the number (Ff) of moles of carboxyl groups of free aliphatic carboxylic acid in the polycarbonate resin composition to the number (Fe) of moles of ester bonds in the component c is calculated by measuring the polycarbonate resin composition by $^1$H-NMR. The measurement must be carried out by use of an NMR analyzer having a frequency of 600 MHz or higher because the amount of the aliphatic carboxylic acid compound in the polycarbonate resin composition is extremely small.

The molar ratio (Ff : Fe) of the number (Ff) of moles of carboxyl groups of free aliphatic carboxylic acid to the number (Fe) of moles of ester bonds in the aliphatic carboxylic acid ester compound which is calculated by the above measurement is suitably 10:90 to 25:75, more suitably 12:88 to 22:78. The Ff:Fe can be calculated as follows, in the case of pentaerythritol ester, for example. That is, the signal of a hydrogen atom of a methylene group bonded to a carboxyl group of aliphatic carboxylic acid component (including both a free acid compound and an ester compound) appears at about 2.3 ppm. The peak area of the region is Sc. Meanwhile, the signal of a hydrogen atom of a methylene group in a pentaerythritol component bonded to an ester bond appears at about 4.1 ppm. The peak area of the region is Se. Based on these, Ff:Fe can be calculated from the following relationship.

$$Ff:Fe = (Sc/2-Se/2):(Se/2)$$

(Ff:Fe is calculated such that Ff and Fe add up to 100.)

(7) About Preparation of Resin Composition

To prepare the polycarbonate resin composition of the present invention, the polycarbonate resin (component a), ultraviolet absorber (component b), mold releasing agent (component c) and phosphorus-based stabilizer (component

d), and the antioxidant (component e) and bluing agent (component f) as required are mixed in the amounts described above. The timing and method of mixing are not particularly limited. The additives may be added to a solution during or after polymerization of the polycarbonate resin or may be mixed and melt-kneaded with the polycarbonate resin in the form of powder, pellets or beads in a mixing device such as a tumbler, ribbon blender or high-speed mixer.

(8) About Preparation and Properties of Spectacle Lens

A spectacle lens formed from the polycarbonate resin composition of the present invention has extremely excellent transparency and retains a total light transmittance of 87% or higher, preferably 88% or higher, in a molded plate having a thickness of 5 mm. Further, it has advantages that it shows a spectral transmittance at 385 nm of 1% or lower, preferably 0.1% or lower, in the molded plate having a thickness of 5 mm and can absorb ultraviolet radiation having this wavelength nearly completely, shows a spectral transmittance at 400 nm of 30% or lower, preferably 10% or lower, and is hardly yellowed by ultraviolet radiation.

Further, the spectacle lens formed from the polycarbonate resin composition of the present invention shows a low degree of yellowness in addition to high transparency and has a yellowness b* in a molded plate having a thickness of 5 mm of preferably 0.3 to 1.6, more preferably 0.4 to 1.4. When the value of this yellowness (b*) is smaller than 0.3, transmitted light through the molded lens is tinged with blue, while when the yellowness is larger than 1.6, the transmitted light is tinged with yellow.

Since the spectacle lens of the present invention uses a polycarbonate resin as a substrate, it has high impact strength and a high refractive index and is excellent in ultraviolet absorbing effect, particularly, effect of absorbing harmful ultraviolet radiation of 385 to 400 mm.

To mold the spectacle lens from the above polycarbonate resin composition, a method known per se can be used. More specifically, although the spectacle lens of the present invention is molded by various molding methods such as injection molding, compression molding, extrusion and injection compression molding, injection compression molding is the most preferable method because a lens having little optical strain can be molded by the method. In the injection compression molding, the cylinder temperature is preferably 250 to 320°C, and the mold temperature is preferably 80 to 140°C.

A spectacle lens formed from the polycarbonate resin composition of the present invention may have a protective layer such as a hard coating layer, an antireflective coating layer or an antifog coating layer formed on its surfaces.

The spectacle lens of the present invention is excellent in cracking resistance and is suited for forming a protective layer. In particular, it is suited for when a coating agent containing a factor which causes an adverse effect on the polycarbonate resin such as a solvent is used.

As a hard coating (curable) layer that is formed on the surface of the lens substrate of the present invention, a thermosetting or activation energy curable hard coating layer is preferably used.

Illustrative examples of a thermosetting hard coating material include silicone-based resins such as organopolysiloxane and melamine-based resins.

As the silicone-based resins, resins described in Japanese Patent Laid-Open Publications Nos. 48-056230, 49-014535, 8-054501 and 8-198985 can be used. An example thereof is a hard-coating layer obtained by drying and/or heat-curing a coating composition comprising an organosilicon compound represented by the following general formula and/or a hydrolysate thereof.

$(R_1)_a(R_2)_bSi\ (OR_3)_{4-(a+b)}$

(wherein $R_1$ and $R_2$ each independently represent an organic group selected from the group consisting of alkyl, allyl, acyl, halogen, glycidoxy, epoxy, amino, phenyl, mercapto, methacryloxy and cyano groups, $R_3$ represents an alkyl group having 1 to 10 carbon atoms, alkoxyalkyl group, allyl group or acyl group, and a and b are an integer of 0 or 1). Specific examples of the organosilicon compound include tetraalkoxysilanes and hydrolysates thereof such as methyl silicate, ethyl silicate, n-propyl silicate, iso-propyl silicate, n-butyl silicate, sec-butyl silicate and tert-butyl silicate; trialkoxysilanes and hydrolysates thereof such as methyl trimethoxysilane, methyl triethoxysilane, ethyl triethoxysilane, vinyl trimethoxysilane, phenyl trimethoxysilane, γ-chloropropyl trimethoxysilane, γ-mercaptopropyl trimethoxysilane, γ-methacryloxypropyl trimethoxysilane, γ-aminopropyl trimethoxysilane, γ-glycidoxypropyl trimethoxysilane, (3,4-epoxycyclohexyl)methyl trimethoxysilane, (3,4-epoxycyclohexyl)ethyl trimethoxysilane and γ-(3,4-epoxycyclohexyl)propyl trimethoxysilane; and dimethoxysilanes and hydrolysates thereof such as dimethyl dimethoxysilane, dimethyl diethoxysilane, phenylmethyl dimethoxysilane and γ-glycidoxypropylmethyl dimethoxysilane.

These organosilicon compounds may be used alone or in admixture of two or more.

These organosilicon compounds are preferably hydrolyzed before use to lower the curing temperature and cause curing to further proceed. The hydrolysis is preferably carried out in the presence of an inorganic acid such as hydrochloric acid or sulfuric acid or an organic acid such as acetic acid. The degree of the hydrolysis can be controlled easily by adjusting the amount of an acid to be added. Further, to carry out the hydrolysis uniformly, organic solvents may be used. Illustrative examples of these organic solvents include alcohols, ketones, ethers, cellosolve and aromatic

hydrocarbons. These solvents are used alone or in admixture of two or more.

The melamine-based resins for the hard-coating layer are obtained by drying and/or heat-curing a coating composition comprising a melamine resin such as methylated methylol melamine, propylated methylol melamine, butylated methylol melamine or isobutylated methylol melamine and a crosslinking agent, a curing agent or the like.

The above melamine-based resins may be used alone or in admixture of two or more. Further, a modifying agent such as an acrylic resin, polyether resin, polyester resin or silicon resin may be mixed with the melamine-based resin in such an amount that does not impair physical properties.

Illustrative examples of the curing agent include inorganic acids such as hydrochloric acid, sulfuric acid and nitric acid, and organic acids such as acetic acid, oxalic acid, maleic acid and p-toluenesulfonic acid.

Illustrative examples of the crosslinking agent include short-chain glycols such as ethylene glycol, diethylene glycol, butanediol and hexanediol, and long-chain glycols such as polyethylene glycol. These may be used alone or in admixture of two or more.

The amounts of the curing agent and crosslinking agent in the melamine-based coating composition are determined as appropriate according to purposes. The amount of the crosslinking agent is determined such that the molar quantity of the functional groups of the melamine-based resin is equal to the molar quantity of the functional groups of the crosslinking agent, and it is preferably 10 to 200 parts by weight, more preferably 20 to 150 parts by weight, based on 100 parts by weight of the melamine-based resin. Meanwhile, the amount of the curing agent is preferably 1 to 10 parts by weight, more preferably 2 to 7 parts by weight, based on 100 parts by weight of the melamine-based resin.

As a solvent, an alcohol, ketone, ether, cellosolve, aromatic hydrocarbon or the like is used. These solvents are used alone or in admixture of two or more.

As the activation energy curable hard-coating material for the hard-coating layer, materials described in Japanese Patent Laid-Open Publications Nos. 54-097633, 3-145602 and 2000-229384 can be used. An example thereof is a polyfunctional compound having two or more activation energy curable functional groups. The activation energy curable functional groups are exemplified by groups having an unsaturated group such as a (meth)acryloyl group, vinyl group or allyl group, preferably groups having a (meth)acryloyl group. An example thereof is a poly(meth)acrylate comprising a compound having two or more hydroxyl groups such as a polyhydric alcohol and (meth)acrylic acid.

Specific examples of the above poly (meth) acrylate compound include 1,4-butanediol di(meth)acrylate, neopentyl glycol di(meth)acrylate, 1,6-hexanediol di(meth)acrylate, cyclohexane dimethanol di(meth)acrylate, polyethylene glycol di(meth)acrylate, glycerol tri(meth)acrylate, trimethylolpropane tri(meth)acrylate, ditrimethylolpropane tetra(meth) acrylate, pentaerythritol tri(meth)acrylate, pentaerythritol tetra(meth)acrylate, dipentaerythritol penta(meth)acrylate, dipentaerythritol hexa(meth)acrylate, tris(2-(meth)acryloyloxyethyl)isocyanurate, bis(2-(meth)acryloyloxyethyl)-2-hydroxylethyl isocyanurate, tris(2-(meth)acryloyloxypropyl)isocyanurate, bisphenol A dimethacrylate, tri(meth)acrylate of ethylene-oxide-added trimethylolpropane, tetra(meth)acrylate of ethylene-oxide-added pentaerythritol, hexa(meth)acrylate of ethylene-oxide-added dipentaerythritol, and hexa(meth)acrylate of caprolactone-added dipentaerythritol.

Preferred examples thereof include trimethylolpropane-based poly(meth)acrylate, pentaerythritol-based poly (meth)acrylate, and isocyanurate-based poly(meth)acrylate.

Further, the above polyfunctional compounds may have various functional groups and bonds such as a hydroxyl group, carboxyl group, halogen group, urethane bond, ether bond, ester bond, thioether bond, amide bond and diorganosiloxane bond, in addition to the above activation energy curable functional groups. In particular, a (meth)acryloyl-group-containing compound having an urethane bond (hereinafter may be referred to as "acrylic urethane") is preferred.

An example of the above acrylic urethane which is a polyfunctional compound is a reaction product of (1) a compound having at least two isocyanate groups in a molecule, (2) a compound having at least two hydroxyl groups in a molecule, and (3) a compound having a hydroxyl group and a (meth)acryloyl group.

Illustrative examples of the compound (1) having at least two isocyanate groups in a molecule include 2,6-tolylenediisocyanate, 2,4-tolylenediisocyanate, diphenylmethane-4,4-diisocyanate, dicyclohexylmethane-4,4-diisocyanate, hexamethylene diisocyanate, tetramethylene diisocyanate, phenylene diisocyanate, xylylene diisocyanate, tetramethylxylylene diisocyanate, 1,5-naphthalene diisocyanate, cyclohexane diisocyanate, and isophorone diisocyanate.

Illustrative examples of the compound (2) having at least two hydroxyl groups in a molecule include polyhydric alcohols such as ethylene glycol, propylene glycol, 1,4-butanediol, 1,6-hexanediol, neopentyl glycol, cyclohexane dimethanol, diethylene glycol, trimethylolpropane, pentaerythritol, ditrimethylolpropane, dipentaerythritol and tris(2-hydroxyethyl)isocyanurate; polyalkylene glycols such as polyethylene glycol and polypropylene glycol; and polyester polyols obtained from a condensation reaction of the above polyhydric alcohol or polyalkylene glycol with a polybasic acid (such as phthalic acid, terephthalic acid or maleic acid) or an anhydride thereof.

Specific examples of the compound (3) having a hydroxyl group and a (meth)acryloyl group include 2-hydroxyethyl (meth)acrylate, 2-hydroxypropyl (meth)acrylate, 4-hydroxybutyl (meth)acrylate, 2-hydroxy-3-chloropropyl (meth) acrylate, 4-hydroxycyclohexyl (meth)acrylate, 2-hydroxy-3-phenyloxypropyl (meth)acrylate, and pentaerythritol acrylate.

Preferred examples of the above acrylic urethane as a polyfunctional compound include acrylic urethane which is a product from pentaerythritol or polypentaerythritol which is a polymer thereof, polyisocyanate and hydroxyalkyl

(meth)acrylate, and acrylic urethane which is a reaction product from hydroxyl-group-containing poly(meth)acrylate of pentaerythritol or polypentaerythritol and polyisocyanate.

When the hard-coating material is cured by use of ultraviolet (UV) radiation as the activation energy beam to be used for curing, a photopolymerization initiator is used. Illustrative examples of the photopolymerization initiator include an aryl ketone based photopolymerization initiator (e.g. acetophenone, benzophenone, benzoin and benzoin ether), a sulfur-containing photopolymerization initiator (e.g. sulfide and thioxanthone), an acyl phosphine oxide based photopolymerization initiator, a diacyl phosphine oxide based photopolymerization initiator, and other photopolymerization initiators.

The amount of the above photopolymerization initiator is preferably 0.01 to 20 parts by weight, particularly preferably 0.1 to 10 parts by weight, based on 100 parts by weight of the ultraviolet curable polyfunctional compound.

Further, an organic solvent may also be contained in the composition to adjust its viscosity to proper viscosity. Illustrative examples of the organic solvent include an alcohol, ketone, ether, cellosolve and aromatic hydrocarbon. These solvents are used alone or in admixture of two or more.

In addition to the above components, the coating composition may also contain other components as long as the physical properties of a cured film to be obtained are not impaired. For example, a curing agent for accelerating the reaction, particulate inorganic materials for adjusting refractive indices to various substrates and various surfactants for improving wettability at the time of coating and the flatness of the cured film may be contained in the composition.

In particular, to improve surface hardness, a solution of high-molecular-weight silicic anhydride and/or colloidal silica that is colloidal dispersion in an organic solvent such as an alcohol are/is suitably used. Colloidal silica having fine silica particles having a particle diameter of 1 to 100 μm dispersed therein is suitably used. Further, the colloidal silica is preferably used in an amount of 5 to 70% by weight to improve adhesion to an antireflective film.

Further, it is also possible to disperse a colorant (dye and pigment) or a filler or to dissolve an organic polymer so as to color a coating film. It is also possible to add an ultraviolet absorber and an antioxidant.

A method for coating the coating composition on a substrate (plastic lens) is not particularly limited. For instance, a known method such as dip coating, spray coating, spin coating, bar coating, flow coating or roll coating can be used. In view of surface accuracy, dip coating and spin coating are preferably used.

The coating composition coated on the substrate is cured in the following manner to form a hard-coating layer. In the case of a thermosetting hard-coating material, it is cured by drying and/or heating after coated on a substrate.

The drying and/or heating are/is preferably carried out at 50 to 200°C, particularly preferably 70 to 150°C.

The drying and/or heating are/is carried out until the cured film obtains sufficient hardness. The heating time decreases as the heating temperature increases. The heating time is preferably 0.3 to 5 hours.

In the case of an activation energy curable hard-coating material, it is irradiated with an activation energy beam such as ultraviolet radiation, an electron beam or a laser beam to be cured after coated on a substrate. The activation energy beam is not particularly limited but is preferably ultraviolet radiation. As an ultraviolet radiation source, a xenon lamp, a pulse xenon lamp, a low-pressure mercury lamp, a high-pressure mercury lamp, an ultrahigh-pressure mercury lamp, a metal halide lamp, a carbon arc lamp, a tungsten lamp or the like can be used.

Further, to increase adhesion between the substrate and the hard-coating layer, the substrate is preferably subjected to a pretreatment before the coating composition is coated thereon. Illustrative examples of the pretreatment include a chemical treatment with acid, alkali, an organic solvent or the like, a physical treatment with plasma, ultraviolet radiation or the like, a washing treatment with various cleaning agents and a primer treatment with various resins.

The thickness of the hard-coating layer cured by the above method is preferably 1 to 50 μm. When the thickness of the layer is larger than 50 μm, curing is insufficient, and adhesion to the substrate is liable to be impaired, while when it is smaller than 1 μm, the abrasion resistance and scratch resistance of the outermost layer formed on this layer may not be developed to a sufficient extent.

On the above cured layer, one or more antireflective layers may be formed as required. As constituents of the antireflective layer, conventionally known materials such as inorganic oxides, fluorides and nitrides are used. Specific examples thereof include silicon dioxide, silicon monoxide, zirconium oxide, tantalum oxide, yttrium oxide, aluminum oxide, titanium oxide, magnesium fluoride and silicon nitride. Illustrative examples of a method for forming the antireflective layer include vacuum deposition, sputtering, ion plating, and an ion beam assisted method. By forming this antireflective layer, an antireflective performance is improved. In addition, an antifog layer may be formed on the above cured layer or antireflective layer.

As described above, the spectacle lens obtained from the polycarbonate resin composition of the present invention hardly shows yellowing even if having a heat history while retaining excellent impact resistance, transparency and ultraviolet screening performance and has excellent molding heat resistance. Accordingly, its effect on the industry is significant.

Examples

Hereinafter, the present invention will be further described with reference to examples. "Parts" indicates "parts by weight".

Evaluations were made in the following manner.

(1) Spectral Transmittance: Sample plates obtained by molding pellets obtained in each example were measured at wavelengths of 300 to 500 nm by use of U-4100 of Hitachi, Ltd.
(2) Total Light Transmittance and Haze: Sample plates obtained by molding pellets obtained in each example were measured by use of NDH-2000 of Nippon Denshoku Industries Co. , Ltd. and a C light source in accordance with JIS K-7361.
(3) Yellowness (b*): Yellowness (b*) was measured by use of Color-Eye700A of GretagMacbeth Co., Ltd. with a C light source and transmission at a view angle of 2°.
(4) Molding Heat Resistance (Retention Hue Difference) : "Flat plates for measuring hues before retention" (70 mm in length x 50 mm in width x 2 mm in thickness) were molded from pellets obtained in each example by means of an injection molding machine at a cylinder temperature of 350°C and a cycle of 1 minute. Further, after the resins were retained in the cylinder for 10 minutes, "flat plates for measuring hues after retention" (70 mm in length x 50 mm in width x 2 mm in thickness) were molded. The hues of the flat plate before and after retention were measured by use of SE-2000 of Nippon Denshoku Industries Co., Ltd. and a C light source, and a hue difference ΔE was determined in accordance with the following expression. The expression indicates that the smaller the ΔE the better molding heat resistance is.

$$\Delta E = \{(L-L')^2 + (a-a')^2 + (b-b')^2\}^{1/2}$$

Hues of "flat plate for measuring hues before retention": L, a, b
Hues of "flat plate for measuring hues after retention" : L', a', b'
(5) Molding Heat Resistance (Retention Molecular Weight Difference) : The viscosity average molecular weight (M) of the "flat plate for measuring hues before retention" obtained in the above test (4), and the viscosity average molecular weight (M') of the "flat plate for measuring hues after retention" obtained in the above test (4) were measured, and their difference ΔM (M-M') was determined. The smaller the ΔM, the better molding heat resistance is.
(6) Mold Releasability: Cup-shaped molded pieces were molded from pellets obtained in each example by use of an injection molding machine, and an ejection load when the molded piece was released from a mold was measured by a memorizer. The smaller this value, the better mold releasability is.
(7) $^1$H-NMR Measurement (Ff:Fe)

35 m of pellets were weighed and dissolved in 0.5 ml of deuterated chloroform. The resulting solution was charged into an ampoule for $^1$H-NMR measurement to prepare a sample for $^1$H-NMR measurement. The measurement sample was subjected to $^1$H-NMR measurement by use of an NMR analyzer (JNM-alpha600 of JEOL Ltd.) at a frequency of 600 MHz. For each sample, the measurement was made for a total of 2,048 times over about 4 hours.

Ff:Fe was calculated from the measurement as follows. That is, the signal of a hydrogen atom of a methylene group bonded to a carboxyl group of aliphatic carboxylic acid component (including both acids and esters) appears at about 2.3 ppm. The peak area of the region is Sc. Meanwhile, the signal of a hydrogen atom of a methylene group in a pentaerythritol component bonded to an ester bond appears at about 4.1 ppm. The peak area of the region is Se. Based on these, Ff:Fe was calculated from the following relationship.

$$Ff:Fe = (Sc/2-Se/2):(Se/2)$$

(Ff:Fe was calculated such that Ff and Fe add up to 100.)

Further, components b, c, d and f used in Examples and Comparative Examples are as follows.
Components b
Component b-1: 2,2'-methylenebis[4-(1,1,3,3-tetramethylbutyl)-6-(2H-benzotriazole-2-yl)phenol]
Component b-2:
2-[2-hydroxy-3,5-bis(α,α-dimethylbenzyl) phenyl]-2H-benzotriazole
Component b-3 (for comparison): 2-(2'-hydroxy-5'-t-octylphenyl)benzotriazole

Components c

Component c-1: full ester of pentaerythritol and aliphatic carboxylic acid (composed essentially of stearic acid and palmitic acid) (RIKESTAR EW-400 of Riken Vitamin Co., Ltd., hydroxyl value: 6, iodine value: 0.4, the raw material of the aliphatic carboxylic acid: animal fat) having an acid value of 9, a 5% weight reduction temperature in TGA of 322°C, a proportion of the total of the area (Ss) of the stearic acid component and the area (Sp) of the palmitic acid component in a GC/MS method in all aliphatic carboxylic acid components of 94% and an area ratio (Ss/Sp) of 1.44. Component c-2 (for comparison): full ester of pentaerythritol and aliphatic carboxylic acid (composed essentially of stearic acid and palmitic acid) (ROXYOL VPG-861 of Cognis Japan Co., Ltd., hydroxyl value: 7, iodine value: 0, the raw material of the aliphatic carboxylic acid: vegetable oil) having an acid value of 1, a 5% weight reduction temperature in TGA of 390°C, a proportion of the total of Ss and Sp in all aliphatic carboxylic acid components of 91% and an area ratio (Ss/Sp) of 1.11. Component c-3 (for comparison): glycerine monofatty acid ester (RIKEMAL S-100A of Riken Vitamin Co., Ltd., acid value: 0.8, hydroxyl value: 327, iodine value: 1.8, 5% weight reduction temperature in TGA: 205°C)

Components d

Component d-1: mixture comprising the following components d-1-1, d-1-2 and d-1-3 in a weight ratio of 71:15:14.

Component d-1-1: mixture comprising tetrakis(2,4-di-t-butylphenyl)-4,4'-biphenylene diphosphonite, tetrakis(2,4-di-t-butylphenyl)-4,3'-biphenylene diphosphonite and tetrakis(2,4-di-t-butylphenyl)-3,3'-biphenylene diphosphonite in a weight ratio of 100:50:10.

Component d-1-2: mixture comprising bis(2,4-di-t-butylphenyl)-4-phenyl-phenyl phosphonite and bis(2,4-di-t-butylphenyl) -3-phenyl-phenyl phosphonite in a weight ratio of 5:3. Component d-1-3: tris(2,4-di-t-butylphenyl)phosphite Component d-2: tris(2,4-di-t-butylphenyl)phosphite

Other Components

Bluing Agent (component f): compound ("Macrolex Violet B" of Bayer AG) represented by the following formula (I)

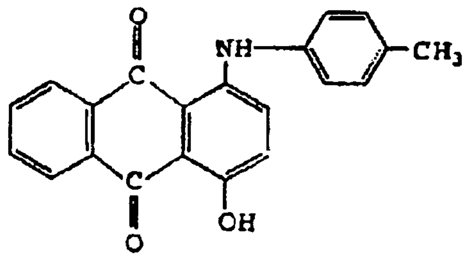

(I)

Example 1

To 100 parts of polycarbonate resin powder (component a) obtained by subjecting bisphenol A and phosgene to interfacial polymerization in the usual manner and having a viscosity average molecular weight of 22,400, 0.3 parts of 2,2'-methylenebis[4-(1,1,3,3-tetramethylbutyl)-6-(2H-benzotriazole-2-yl)phenol] (component b-1) as an ultraviolet absorber, 0.2 parts of full ester (RIKESTAR EW-400 of Riken Vitamin Co., Ltd.) (component c-1) of pentaerythritol and aliphatic carboxylic acid (composed essentially of stearic acid and palmitic acid), 0.06 parts of phosphorus-based heat stabilizer (component d-1) and 0.7 ppm of bluing agent (component f) were added. After they were fully mixed by a tumbler, the mixture was pelletized at 260 to 280°C by a 30-mm vented extruder.

The pellets were molded into a sample plate (70 mm in length x 50 mm in width x 5 mm in thickness) at a cylinder temperature of 300°C by an injection molding machine, and the b* value, haze, total light transmittance and spectral transmittances at 385 nm and 400 nm of the sample plate were measured. Further, these pellets were molded into a sample plate (70 mm in length x 50 mm in width x 2 mm in thickness) at a cylinder temperature of 350°C by an injection molding machine, and the ΔE and ΔM of the sample plate were measured. The results are shown in Table 1.

Further, the obtained pellets were injection-compression-molded into a concave lens for spectacles (curvature radius of the front face: 293 mm, curvature radius of the rear face: -73 mm, thickness at the center: 1.5 mm, thickness at the periphery: 10.0 mm, external diameter: 77.5 mm) by use of a mold for a concave lens for spectacles at a cylinder temperature of 280 to 300°C and a mold temperature of 125°C. This lens had a good appearance and excellent transparency. This lens was coated uniformly with an ultraviolet curable coating composed essentially of trimethylolpropane tri(meth)acrylate by dipping. After dried at room temperature, the coating was cured by an ultraviolet irradiation device at a conveyor speed of 4 m/min and an irradiance of 650 $mJ/cm^2$. The resulting lens had a good appearance, and no deformation of the lens substrate was seen before and after curing by ultraviolet radiation.

Example 2

A sample plate was obtained in the same manner as in Example 1 except that 0.05 parts of tris(2,4-di-t-butylphenyl)phosphite (component d-2) was further added as a phosphorus-based heat stabilizer. The results of evaluation of the sample plate are shown in Table 1.

Example 3

A sample plate was obtained in the same manner as in Example 2 except that the amount of the component d-1 was changed to 0.03 parts. The results of evaluation of the sample plate are shown in Table 1.

Example 4

A sample plate was obtained in the same manner as in Example 1 except that the amount of the component c-1 was changed to 0.05 parts. The results of evaluation of the sample plate are shown in Table 1. Example 5

A sample plate was obtained in the same manner as in Example 1 except that the amount of the component c-1 was changed to 0.01 parts. The results of evaluation of the sample plate are shown in Table 1.

Example 6

A sample plate was obtained in the same manner as in Example 1 except that the amount of the component b-1 was changed to 0.1 parts. The results of evaluation of the sample plate are shown in Table 1.

Comparative Example 1

A sample plate was obtained in the same manner as in Example 1 except that the component c-1 was changed to the above full ester (ROXYOL VPG-861 of Cognis Japan Co., Ltd.) (component c-2) of pentaerythritol and aliphatic carboxylic acid (composed essentially of stearic acid and palmitic acid). The results of evaluation of the sample plate are shown in Table 1.

Comparative Example 2

A sample plate was obtained in the same manner as in Example 1 except that the component c-1 was changed to the above glycerine monofatty acid ester (RIKEMAL S-100A of Riken Vitamin Co., Ltd.) (component c-3). The results of evaluation of the sample plate are shown in Table 1.

Comparative Example 3

A sample plate was obtained in the same manner as in Example 1 except that the component c-1 was not added. The results of evaluation of the sample plate are shown in Table 1.

Comparative Example 4

A sample plate was obtained in the same manner as in Example 1 except that the amount of the component c-1 was changed to 2.2 parts. The results of evaluation of the sample plate are shown in Table 1.

Comparative Example 5

A sample plate was obtained in the same manner as in Example 1 except that the amount of the component b-1 was changed to 0.05 parts. The results of evaluation of the sample plate are shown in Table 1.

Comparative Example 6

A sample plate was obtained in the same manner as in Example 1 except that the component b-1 was changed to 2-(2'-hydroxy-5'-t-octylphenyl)benzotriazole (component b-3). The results of evaluation of the sample plate are shown in Table 1.

Example 7

A sample plate was obtained in the same manner as in Example 1 except that the component b-1 was changed to 2- [2-hydroxy-3,5-bis(α,α-dimethylbenzyl)phenyl] -2H-benzotriazole (component b-2). The results of evaluation of the sample plate are shown in Table 2.

Example 8

A sample plate was obtained in the same manner as in Example 7 except that 0.05 parts of tris(2,4-di-t-butylphenyl)phosphite (component d-2) was further added as a phosphorus-based heat stabilizer. The results of evaluation of the sample plate are shown in Table 2.

Comparative Example 7

A sample plate was obtained in the same manner as in Example 7 except that the component c-1 was changed to the component c-2. The results of evaluation of the sample plate are shown in Table 2.

Comparative Example 8

A sample plate was obtained in the same manner as in Example 7 except that the component c-1 was changed to the component c-3. The results of evaluation of the sample plate are shown in Table 2.

Comparative Example 9

A sample plate was obtained in the same manner as in Example 7 except that the component c-1 was not added. The results of evaluation of the sample plate are shown in Table 2.

Table 1

| | Ultraviolet Absorber (Component b) | | Mold Releasing Agent (Component c) | | Stabilizer (Component d) | | Ff:Fe | Hue |
|---|---|---|---|---|---|---|---|---|
| | Kind | Amount (parts) | Kind | Amount (parts) | Kind | Amount (parts) | | b* |
| Ex.1 | b-1 | 0.3 | c-1 | 0.200 | d-1 | 0.06 | 14:86 | 0.70 |
| Ex.2 | b-1 | 0.3 | c-1 | 0.200 | d-1<br>d-2 | 0.06<br>0.05 | 14:86 | 0.65 |
| Ex.3 | b-1 | 0.3 | c-1 | 0.200 | d-1<br>d-2 | 0.03<br>0.05 | 14:86 | 0.60 |
| Ex.4 | b-1 | 0.3 | c-1 | 0.050 | d-1 | 0.06 | 14:86 | 0.67 |
| Ex.5 | b-1 | 0.3 | c-1 | 0.010 | d-1 | 0.06 | 14:86 | 0.65 |
| Ex.6 | b-1 | 0.1 | c-1 | 0.200 | d-1 | 0.06 | 14:86 | 0.65 |
| C.Ex.1 | b-1 | 0.3 | c-2 | 0.200 | d-1 | 0.06 | 7:93 | 0.67 |
| C.Ex.2 | b-1 | 0.3 | c-3 | 0.200 | d-1 | 0.06 | - | 0.67 |
| C.Ex.3 | b-1 | 0.3 | c-1 | 0.000 | d-1 | 0.06 | 14:86 | 0.69 |
| C.Ex.4 | b-1 | 0.3 | c-1 | 2.200 | d-1 | 0.06 | 14:86 | 0.75 |
| C.Ex.5 | b-1 | 0.05 | c-1 | 0.200 | d-1 | 0.06 | 14:86 | 0.65 |
| C.Ex.6 | b-3 | 0.3 | c-1 | 0.200 | d-1 | 0.06 | 14:86 | 0.60 |

Ex.: Example, C.Ex.: Comparative Example

Table 1 (continued)

| | ΔE | ΔM | Haze | Total Light Transmittance | Spectral Transmittance | | Mold Release Stress |
|---|---|---|---|---|---|---|---|
| | | | | Tt(%) | 400 nm | 385 nm | MPa |
| Ex.1 | 0.10 | 0.50 | 0.14 | 88.6 | 7.5 | 0.01 | 7.2 |
| Ex.2 | 0.14 | 0.50 | 0.18 | 88.2 | 7.4 | 0.01 | 7.3 |
| Ex.3 | 0.05 | 0.40 | 0.15 | 88.0 | 7.4 | 0.01 | 7.0 |
| Ex.4 | 0.08 | 0.30 | 0.12 | 88.3 | 7.6 | 0.01 | 12.0 |
| Ex.5 | 0.05 | 0.28 | 0.10 | 88.4 | 7.5 | 0.01 | 16.0 |
| Ex.6 | 0.08 | 0.35 | 0.10 | 88.4 | 15.2 | 0.9 | 7.0 |
| C.Ex.1 | 0.65 | 0.76 | 0.18 | 88.5 | 8.0 | 0.01 | 13.0 |
| C.Ex.2 | 1.02 | 1.50 | 0.18 | 88.3 | 8.0 | 0.01 | 10.2 |
| C.Ex.3 | 0.09 | 0.40 | 0.18 | 88.3 | 8.0 | 0.01 | 31.0 |
| C.Ex.4 | 2.50 | 3.50 | 0.18 | 88.3 | 8.0 | 0.01 | 3.2 |
| C.Ex.5 | 0.08 | 0.38 | 0.10 | 88.4 | 35.0 | 2.2 | 6.7 |
| C.Ex.6 | 0.11 | 0.48 | 0.12 | 88.4 | 70.1 | 1.6 | 7.2 |

Ex.: Example, C.Ex.: Comparative Example

Table 2

| | Ultraviolet Absorber (Component b) | | Mold Releasing Agent (Component c) | | Stabilizer (Component d) | | Ff:Fe | Hue |
|---|---|---|---|---|---|---|---|---|
| | Kind | Amount (parts) | Kind | Amount (parts) | Kind | Amount (parts) | | b* (Virgin) |
| Ex.7 | b-2 | 0.3 | c-1 | 0.200 | d-1 | 0.06 | 14:86 | 0.62 |
| Ex.8 | b-2 | 0.3 | c-1 | 0.200 | d-1<br>d-2 | 0.06<br>0.05 | 14:86 | 0.59 |
| C.Ex.7 | b-2 | 0.3 | c-2 | 0.200 | d-1 | 0.06 | 7:93 | 0.67 |
| C.Ex.8 | b-2 | 0.3 | c-3 | 0.200 | d-1 | 0.06 | - | 0.67 |
| C.Ex.9 | b-2 | 0.3 | c-1 | 0.000 | d-1 | 0.06 | 14:86 | 0.69 |

Ex.: Example, C.Ex.: Comparative Example

Table 2 (continued)

| | ΔE | ΔM | Haze | Total Light Transmittance | Spectral Transmittance | | Mold Release Stress |
|---|---|---|---|---|---|---|---|
| | | | | Tt | 400 nm | 385 nm | MPa |
| Ex.7 | 0.15 | 0.30 | 0.14 | 88.3 | 8.7 | 0.01 | 7.5 |
| Ex.8 | 0.12 | 0.20 | 0.18 | 88.5 | 8.9 | 0.01 | 7.8 |
| C.Ex.7 | 0.68 | 0.69 | 0.19 | 88.3 | 8.0 | 0.01 | 12.7 |
| C.Ex.8 | 1.08 | 1.43 | 0.18 | 88.3 | 8.0 | 0.01 | 10.1 |
| C.Ex.9 | 0.09 | 0.40 | 0.18 | 88.3 | 8.0 | 0.01 | 30.0 |

Ex.: Example, C.Ex.: Comparative Example

**Claims**

1. A spectacle lens formed from a polycarbonate resin composition comprising, based on (1) 100 parts by weight of polycarbonate resin (component a), (2) 0.1 to 0.5 parts by weight of at least one ultraviolet absorber (component b) selected from the group consisting of 2,2'-methylenebis[4-(1,1,3,3-tetramethylbutyl)-6-(2H-benzotriazole-2-yl) phenol] and 2-[2-hydroxy-3,5-bis(α,α-dimethylbenzyl)phenyl]-2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and which has an acid value of 4 to 20, and (4) 0.001 to 0.2 parts by weight of phosphorus-based stabilizer (component d).

2. The spectacle lens of claim 1, wherein the aliphatic carboxylic acid of the component c comprises a palmitic acid component and a stearic acid component, and in a peak area in a gas chromatograph-mass spectrometry (GC/MS), the total of the area (Sp) of the palmitic acid component and the area (Ss) of the stearic acid component constitutes at least 80% of all aliphatic carboxylic acid component, and the ratio (Ss/Sp) of the two areas is 1.3 to 30.

3. The spectacle lens of claim 1, wherein the component c has a 5% weight reduction temperature in TGA (thermogravimetrical analysis) of 250 to 360°C.

4. The spectacle lens of claim 1, wherein the component c has an acid value of 4 to 18.

5. The spectacle lens of claim 1, wherein the component b is 2,2'-methylenebis[4-(1,1,3,3-tetramethylbutyl)-6-(2H-benzotriazole-2-yl)phenol].

6. The spectacle lens of claim 1, wherein the component d is a phosphorus-based stabilizer composed essentially of tetrakis(2,4-di-t-butylphenyl)-4,4'-biphenylene diphosphonite.

7. The spectacle lens of claim 1, wherein the component b is contained in an amount of 0.15 to 0.4 parts by weight based on 100 parts by weight of the component a.

8. The spectacle lens of claim 1, wherein the component c is contained in an amount of 0.05 to 0.5 parts by weight based on 100 parts by weight of the component a.

9. The spectacle lens of claim 1, wherein the polycarbonate resin is a polycarbonate resin comprising 2,2-bis(4-hydroxyphenyl)propane as a main dihydric phenol component.

10. The spectacle lens of claim 1, which substantially does not allow a wavelength of 385 nm to penetrate therethrough and having a total light transmittance of not lower than 85%.

11. A spectacle lens formed from a polycarbonate resin composition comprising, based on (1) 100 parts by weight of polycarbonate resin (component a), (2) 0.1 to 0.5 parts by weight of at least one ultraviolet absorber (component b) selected from the group consisting of 2,2'-methylenebis[4-(1,1,3,3-tetramethylbutyl)-6-(2H-benzotriazole-2-yl) phenol] and 2-[2-hydroxy-3,5-bis(α,α-dimethylbenzyl) phenyl] -2H-benzotriazole, (3) 0.005 to 2 parts by weight of mold releasing agent (component c) which substantially comprises a full ester of an aliphatic tetrahydric to octahydric alcohol having 5 to 30 carbon atoms and an aliphatic carboxylic acid having 10 to 22 carbon atoms and (4) 0.001 to 0.2 parts by weight of phosphorus-based stabilizer (component d), the molar ratio (Ff:Fe) of the number (Ff) of moles of carboxyl groups of free aliphatic carboxylic acid in the polycarbonate resin composition to the number (Fe) of moles of ester bonds in the component c being 8:92 to 30:70.

## INTERNATIONAL SEARCH REPORT

International application No. PCT/JP2005/009832

A. CLASSIFICATION OF SUBJECT MATTER
Int.Cl$^7$ C08L69/00, C08K5/103, 5/3467, G02C7/02

According to International Patent Classification (IPC) or to both national classification and IPC

B. FIELDS SEARCHED

Minimum documentation searched (classification system followed by classification symbols)
Int.Cl$^7$ C08L69/00, C08K5/103, 5/3467, G02C7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 9-263694 A (Teijin Kasei Kabushiki Kaisha), 07 October, 1997 (07.10.97), Claims; Par. Nos. [0008] to [0026], [0029], [0038] & US 5952096 A1 & EP 0786675 A2 | 1-11 |
| Y | JP 2004-83850 A (Teijin Kasei Kabushiki Kaisha), 18 March, 2004 (18.03.04), Full text; all drawings & US 2004/0152806 A & WO 03/095557 A1 | 1-11 |
| Y | JP 2003-90901 A (Teijin Kasei Kabushiki Kaisha), 28 March, 2003 (28.03.03), Full text; all drawings (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 August, 2005 (26.08.05) | 13 September, 2005 (13.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/009832

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-160660 A (Teijin Kasei Kabushiki Kaisha),<br>03 June, 2003 (03.06.03),<br>Par. Nos. [0071] to [0075]<br>(Family: none) | 6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6035141 A
- JP 6041162 A
- JP 7092301 A
- JP 62146951 A
- JP 4292661 A
- JP 9263694 A
- JP 9291205 A
- WO 03095557 A
- JP 48056230 A
- JP 49014535 A
- JP 8054501 A
- JP 8198985 A
- JP 54097633 A
- JP 3145602 A
- JP 2000229384 A